# EUROPÄISCHE PATENTSCHRIFT

(11) **EP 1 064 707 B1**
(45) Veröffentlichungstag und Bekanntmachung des Hinweises auf die Patenterteilung: **04.06.2003**
(21) Anmeldenummer: 99911790.6
(22) Anmeldetag: 13.03.1999
(51) Int. Cl.: H02B 1/30

(54) **RAHMENGESTELL FÜR EINEN SCHALTSCHRANK**
FRAME FOR A SWITCH CABINET
BAIE DESTINEE A UNE ARMOIRE DE DISTRIBUTION

(30) Priorität: 18.03.1998 DE 19811914; 02.04.1998 DE 19814741
(43) Veröffentlichungstag der Anmeldung: 03.01.2001
(73) Patentinhaber: Rittal-Werk Rudolf Loh GmbH & Co. KG, 35745 Herborn (DE)
(72) Erfinder: HARTEL, Marc, D-35447 Reiskirchen (DE); NICOLAI, Walter, D-35418 Buseck (DE); BESSERER, Horst, D-35745 Herborn (DE); BENNER, Rolf, D-35745 Herborn (DE)
(74) Vertreter: Fleck, Hermann-Josef, Dr.-Ing.
(86) Internationale Anmeldenummer: EP9901667
(87) Internationale Veröffentlichungsnummer: WO99048179

(56) Entgegenhaltungen:
- EP-A- 0 514 668
- FR-A- 2 551 303
- FR-A- 2 689 328

## Beschreibung

Die Erfindung betrifft ein Rahmengestell für einen Schaltschrank mit vertikalen Rahmenprofilen, einem Boden- und einem Deckrahmen, wobei der Boden- und der Deckrahmen als Stanz-Biegeteil aus einem Stahlblechzuschnitt gefertigt sind und einen horizontalen Boden aufweisen, auf dem die vertikalen Rahmenprofile befestigt sind, wobei von dem Boden ein Verstärkungsrand abgebogen ist, wobei an dem Boden- und dem Deckrahmen vier Steckansätze befestigt sind, die mit je mindestens einer Gewindeaufnahme versehen sind, wobei die vertikalen Rahmenprofile Schraubenaufnahmen aufweisen, die fluchtend zu den Gewindeaufnahmen des Steckansatzes angeordnet sind, und wobei in die Schraubenaufnahmen Befestigungsschrauben eingeführt und in die Gewindeaufnahmen eingeschraubt sind.

Ein derartiges Rahmengestell ist aus der FR-A-2 551 303 bekannt.

Ein solches Rahmengestell ist auch aus der DE 43 41 943 A1 bekannt. Die vertikalen Rahmenprofile eines solchen Rahmengestelles sind als Strangpreßprofile ausgebildet. Sie weisen in Längsrichtung verlaufende Schraubkanäle auf. Diese vertikalen Rahmenprofile können mit ihren Stirnseiten auf den Boden des Bodenrahmens aufgesetzt und hieran befestigt werden. Hierzu werden die Schraubkanäle fluchtend zu Schraubaufnahmen ausgerichtet, die in den Boden eingebracht sind. Anschließend können Befestigungsschrauben von der Unterseite des Bodenrahmens her durch die Schraubaufnahmen gesteckt und dann in die Schraubkanäle eingeschraubt werden.

Es ist Aufgabe der Erfindung, ein Rahmengestell der eingangs erwähnten Art zu schaffen, das einen einfachen Aufbau aufweist, und das einfach und schnell zusammengefügt werden kann.

Diese Aufgabe der Erfindung wird durch die Merkmale des Anspruchs 1 gelöst.

Zur Montage des Rahmengestelles können die vertikalen Rahmenprofile mit ihren Steckaufnahmen auf die Steckansätze aufgeschoben werden. Der Boden des Boden- bzw. des Deckrahmens kann dabei als Anschlag dienen, an dem das vertikale Rahmenprofil mit seiner Stirnseite anschlägt. In dieser Montageposition kann das vertikale Rahmenprofil dann einfach mittels einer Befestigungsschraube fixiert werden. Die Montage ist einfach und schnell auch von ungeübter Hand durchführbar. Dies wird vor allem auch von der geringen Anzahl der zu montierenden Teile unterstützt.

Eine einfache Ausgestaltung der vertikalen Rahmenprofile ergibt sich dann, wenn vorgesehen ist, daß die Steckaufnahme der vertikalen Rahmenprofile von einem Hohlprofil gebildet ist, das mit zwei senkrecht zueinander stehenden Profilinnenwänden in den Innenraum des Schaltschrankes gerichtet ist, daß sich an eine der Profilinnenwände eine Profilwand-Verlängerung anschließt, von der ein Schenkel abgebogen ist, der im Abstand zum Hohlprofil steht und der zusammen mit dem Hohlprofil und der Profilwand-Verlängerung eine nach außen offene Seitenwandaufnahme bildet. In der Seitenwandaufnahme kann der abgekantete Rand einer Seitenwand abgedichtet aufgenommen werden.

Um an den vertikalen Rahmenprofilen Einbauten im Innenraum des Schaltschrankes befestigen zu können, sieht eine mögliche Erfindungsvariante vor, daß das vertikale Rahmenprofil beabstandet zu dem die Steckaufnahme bildenden Hohlprofil eine Befestigungswand aufweist, die mit Reihen von in gleicher Teilung zueinander beabstandeten Befestigungsaufnahmen versehen ist.

Eine bevorzugte Erfindungsvariante ist dadurch gekennzeichnet, daß der Bodenund der Deckrahmen identisch ausgebildet sind. Damit Kabel einfach in den Innenraum des Schaltschrankes eingeführt werden können, ist es denkbar, daß aus dem Boden des Boden- und/oder Deckrahmens wenigstens ein als Kabeleinführung dienender Ausbruch ausgestanzt ist.

Wenn vorgesehen ist, daß von dem Bodenrahmen im Anschluß an den Rand eine horizontal verlaufende Abkantung abgebogen ist, dann läßt sich dieser direkt mit der Abkantung auf den Boden aufstellen. Zusätzliche Füße sind dann nicht zwingend erforderlich.

Die Erfindung wird im folgenden anhand eines in den Zeichnungen dargestellten Ausführungsbeispieles näher erläutert. Es zeigen:
- Fig. 1: in perspektiver Explosionsdarstellung ein Rahmengestell eines Schaltschrankes, an dem wahlweise unterschiedliche Wandelemente angebracht werden können und
- Fig. 2: das Rahmengestell gemäß Fig. 1 in perspektivischer Teildarstellung mit einem angebauten Wandelement.

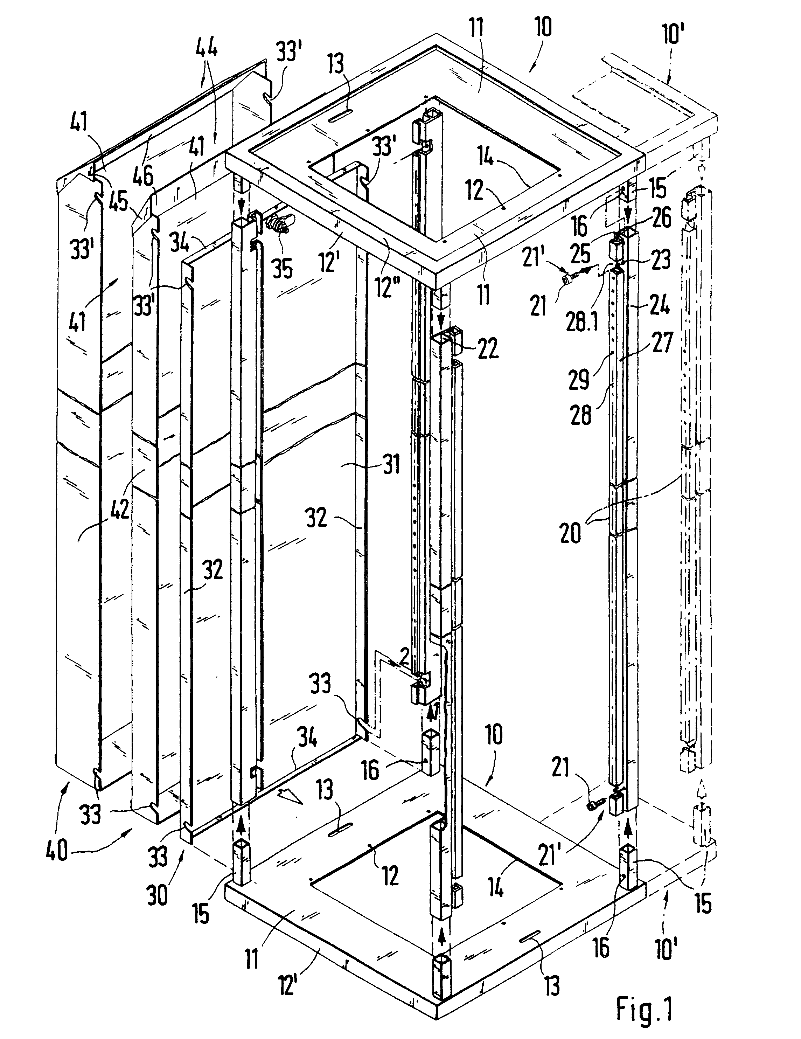

In der Fig. 1 ist ein Rahmengestell für einen Schaltschrank dargestellt, welches einen unteren Boden- und einen oberen Deckrahmen 10 aufweist. Diese sind aus einem flächigem Stahlblechzuschnitt gefertigt. Sie weisen einen horizontal ausgerichteten Boden 11 auf, der an seinen Seiten mit abgewinkelten Rändern 12' versehen ist. Die Ränder 12' gehen in Abkantungen 12" über, die parallel zu dem Boden 11 ausgerichtet sind. In den Eckbereichen des Bodens 11 sind Steckansätze 15 angeordnet. Diese können mit dem Boden- bzw. Deckrahmen 10 entweder verschraubt oder verschweißt werden. Die Steckansätze 15 weisen eine Gewindeaufnahme 16 auf, die dem Innenraum des Schaltschrankes zugekehrt ist. Auf die Steckansätze 15 können vertikale Rahmenprofile 20 mit Steckaufnahmen 22 aufgeschoben werden. Die vertikalen Rahmenprofile 20 weisen dabei ein Vierkanthohlprofil auf, dessen Innenquerschnitt in etwa dem Außenquerschnitt des Steckansatzes 15 entspricht. Das Vierkanthohlprofil ist mit seinen Profilseiten parallel zu den Seiten des Rahmengestelles ausgerichtet. An eine dem Innenraum des Schaltschrankes zugekehrte Profilseite ist eine Verlängerung 25 angeschlossen. Von dieser ist ein Schenkel 26 nach außen abgebogen. Der Schenkel 26 steht im Abstand zu dem Vierkanthohlprofil. Damit ergibt sich zwischen dem Vierkanthohlprofil und dem Schenkel 26 eine Aufnahme, in die ein Wandelement 30 mit einer Abwinklung 32 eingesetzt werden kann. Der Schenkel 26 geht in eine Außenwand 27 über, die parall zur zugeordneten Seite des Rahmengestelles steht. An dieser Außenwand 27 kann beispielsweise das Wandelement 30 mittels einer Dichtung abgestützt sein. Die Außenwand 27 trägt eine Befestigungswand 28, die zum Innenraum des Schaltschrankes gerichtet ist. In diese Befestigungswand 28 ist eine Reihe von Befestigungsaufnahmen 29 eingebracht, die zueinander in gleicher Teilung beabstandet angeordnet sind. Wenn die vertikalen Rahmenprofile 20 auf die Steckansätze 15 aufgeschoben sind, so sind Schraubenaufnahmen 23 der vertikalen Rahmenprofile 20 fluchtend zu den Gewindeaufnahmen 16 der Steckansätze 15 ausgerichtet. In diese Schraubenaufnahmen 23 können Befestigungsschrauben 21' eingesetzt und in die Gewindeaufnahmen 16 eingeschraubt werden. Der Zugang zu der Schraubenaufnahme 23 ist dabei über eine Aussparung 28.1 möglich. Damit sind die vertikalen Rahmenprofile 20 mit den Boden- und Deckrahmen 10 zu dem Rahmengestell fest verbunden.

In der Fig. 1 ist in gestrichelter Darstellung die Verwendung von unterschiedlich breiten Boden- und Deckrahmen 10, 10' symbolisiert. Bei der Verwendung der verschiedenen Basiseinheiten 10, 10' bleiben die vertikalen Rahmenprofile 20 unverändert.

Die offenen Seiten des Rahmengestelles können mittels Wandelementen 30, 40 und einer, in der Zeichnung nicht dargestellten Tür verkleidet werden. In der Fig. 1 ist angedeutet, daß unterschiedliche Wandelemente 30, 40 wahlweise an das Rahmengestell angebaut werden können. Beispielsweise kann das Wandelement 30 verwendet werden. Das Wandelement 30 hat eine flächige, vertikal ausgerichtete Wandung 31, die an ihren Rändern mit Abwinklungen 32, 34 versehen ist. Die Abwinklungen 32, 34 weisen in Richtung des Innenraumes des Rahmengestelles. Die beiden vertikalen Abwinklungen 32 sind mit schlitzförmigen Scharnierbolzen-Aufnahmen 33 versehen. Dabei sind die Scharnierbolzen-Aufnahmen 33 schräg aufwärts gerichtet in die Abwinklungen 32 eingeschnitten. Sie weisen ein geöffnetes Schlitzende auf, mittels dessen sie auf den Schraubenkopf der Befestigungsschraube 21' aufgeschoben werden können. Der Schraubenkopf der Befestigungsschraube 21' dient als Scharnierbolzen 21. Das Wandelement 30 kann mit seinen Scharnierbolzen-Aufnahmen 33 auf den Scharnierbolzen 21 aufgeschoben werden, so daß eine Schwenklagerung mit horizontal ausgerichteter Schwenkachse entsteht. Das Wandelement 30 kann dabei im Winkel zur zugeordneten Seite des Rahmengestelles gehalten werden, ohne daß es von den Scharnierbolzen 21 abrutscht. Dies wird durch die schräg eingeschnittenen Scharnierbolzen-Aufnahmen 33 ermöglicht. Zur Festlegung des Wandelementes 30 ist ein als Schloß ausgebildetes Befestigungselement 35 vorgesehen. In der eingeklappten Schwenkstellung schlägt das Wandelement 30 an den beiden oberen Befestigungsschrauben 21 an. Hierzu sind die Abwinklungen 32 mit Ausklinkungen 33' versehen, die die Anschläge bilden. In dieser Montageposition kann das Schloß 35 verdreht werden, so daß ein zungenförmiges Schließelement des Schlosses in eine schlitzförmige Schließaufnahme 13 des Boden- bzw. Deckrahmens 10 eingreifen kann.

Anstelle des Wandelementes 30 kann auch ein Wandelement 40 an das Rahmengestell angebaut werden, das eine dem Innenraum des Rahmengestelles abgewandte Ausbauchung aufweist. Diese Ausbauchung dient als Kabelkanal. Die Ausbauchung wird dabei von einer seitlichen Wandung 41 und den daran angeschlossenen Abwinklungen 42 gebildet. Im Gegensatz zu den Abwinklungen 32, 34 des Wandelementes 30 weisen die Abwinklungen 42 des Wandelementes 40 eine größere Bautiefe auf. Im oberen, der Basiseinheit zugewandten Bereich ist das Wandelement 40 geöffnet und kann mit einem Deckel 44 verschlossen werden. Der Deckel 44 weist ein oberes Deckelblech 46 auf, an das sich abwärtsgerichtete Seitenteile 45 anschließen. Die Seitenteile 45 übergreifen die Abwinklungen 42, so daß das Deckelblech 46 mit seiner Unterseite auf den Abwinklungen 42 anschlägt. Die Abwinklungen 42 sind in diesem Bereich abgeschrägt, so daß auch das Deckelblech 46 im Winkel zur Horizontalen angeordnet ist. Dies ermöglicht einen verbesserten Wasserablauf. In der Fig. 1 sind zwei Wandelemente 40 dargestellt, die wahlweise an das Rahmengestell angebaut werden können. Diese beiden Wandelemente 40 weisen verschiedene Bautiefen auf. Damit können auch, je nach Bedarf des Anwenders, unterschiedlich große Rangierräume für Kabel zur Verfügung gestellt werden. Die Anbringung der Wandungen 40 erfolgt in gleicher Weise wie die Befestigung des Wandelementes 30. Zunächst werden diese mit Scharnierbolzen-Aufnahmen 33 auf die Scharnierbolzen 21 aufgesetzt. Anchließend lassen sich die Wandelemente 40 in die aufrechte Position bewegen und mittels Befestigungselementen an dem Rahmengestell festlegen. Die Abwinklungen 42 sind wiederum mit den Ausklinkungen 33' versehen, die als Anschläge dienen. Wenn der Schaltschrank in einem feuchtigkeitsgeschützten Innenraum aufgestellt ist, so kann der Deckel 44 abgenommen werden. Über den Deckel 44 können Kabel in den Kabelschacht der Wandung 40 eingeführt werden. Aus dem Kabelschacht lassen sich dann die eingeführten Kabel in den Innenraum des Schaltschrankes abzweigen. Die Kabeleinführung ist auch durch einen von dem Boden- und dem Deckrahmen 10, 10' umschlossenen Ausbruch 14 hindurch möglich. Der Ausbruch 14 kann mittels Abdeckplatten verschlossen werden, die an Befestigungsaufnahmen 12, die um den Ausbruch 14 herum angeordnet sind, befestigt werden. Wahlweise lassen sich auch an den Befestigungsaufnahmen 12 Kabeldurchführungen anschrauben.

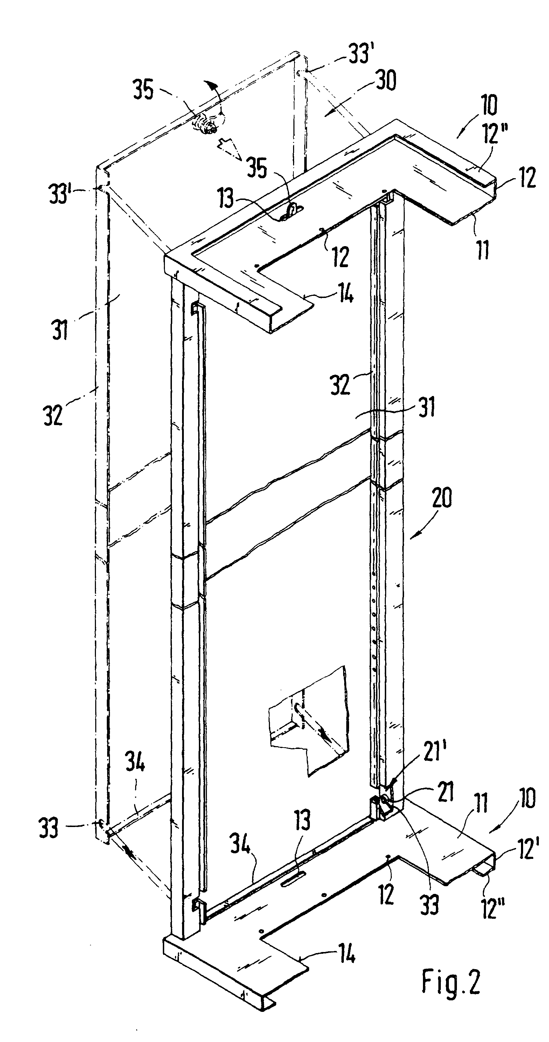

In der Fig. 2 ist die Vorgehensweise zur Befestigung eines Wandelements 40 an dem Rahmengestell näher verdeutlicht.

## Patentansprüche

1. Rahmengestell für einen Schaltschrank mit vertikalen Rahmenprofilen (20), einem Boden- und einem Deckrahmen (10), wobei der Boden- und der Deckrahmen (10) als Stanz-Biegeteil aus einem Stahlblechzuschnitt gefertigt sind und einen horizontalen Boden (11) aufweisen, auf dem die vertikalen Rahmenprofile (20) befestigt sind, wobei von dem Boden ein Verstärkungsrand 12', 12" abgebogen ist, wobei an dem Boden- und dem Deckrahmen (10) vier Steckansätze (15) befestigt sind, die mit je mindestens einer Gewindeaufnahme (16) versehen sind, wobei die vertikalen Rahmenprofile (20) Schraubenaufnahmen (23) aufweisen, die fluchtend zu den Gewindeaufnahmen (16) des Steckansatzes (15) angeordnet sind, und wobei in die Schraubenaufnahmen (23) Befestigungsschrauben (21') eingeführt und in die Gewindeaufnahmen (16) eingeschraubt sind,
**dadurch gekennzeichnet,**
**dass** der Boden (11) des Boden- und Deckrahmens (10) dem Schaltschrank-Innenraum zugekehrt und der Verstärkungsrand (12', 12") vom Schaltschrank-Innenraum weggerichtet ist, und
**dass** die vertikalen Rahmenprofile (20) Steckaufnahmen (22) aufweisen, mittels denen sie stirnseitig auf die Steckansätze (15) aufgeschoben sind.

2. Rahmengestell nach Anspruch 1,
**dadurch gekennzeichnet,**
**daß** die Steckaufnahme (22) der Rahmenprofile (20) von einem Hohlprofil gebildet ist, das mit zwei senkrecht zueinander stehenden Profilinnenwänden in den Innenraum des Schaltschrankes gerichtet ist,
**daß** sich an eine der Profilinnenwände eine Profilwand-Verlängerung (25) anschließt, von der ein Schenkel (26) abgebogen ist, der im Abstand zum Hohlprofil steht und der zusammen mit dem Hohlprofil und der Profilwand-Verlängerung (25) eine nach außen offene Seitenwandaufnahme bildet.

3. Rahmengestell nach Anspruch 1 oder 2,
**dadurch gekennzeichnet,**
**daß** das vertikale Rahmenprofil (20) beabstandet zu dem die Steckaufnahme bildenden Hohlprofil eine Befestigungswand (28) aufweist, die mit Reihen von in gleicher Teilung zueinander beabstandeten Befestigungsaufnahmen (29) versehen ist.

4. Rahmengestell nach einem der Ansprüche 1 bis 3,
**dadurch gekennzeichnet,**
**daß** der Boden- und der Deckrahmen (10) identisch ausgebildet sind.

5. Rahmengestell nach einem der Ansprüche 1 bis 4,
**dadurch gekennzeichnet,**
**daß** aus dem Boden (11) des Boden- und/oder Deckrahmens (10) wenigstens ein Ausbruch (14) ausgestanzt ist.

6. Rahmengestell nach einem der Ansprüche 1 bis 5,
**dadurch gekennzeichnet,**
**daß** von dem Bodenrahmen (10) im Anschluß an den Rand (12') eine horizontal verlaufende Abkantung (12") abgebogen ist.

## Claims

1. Framework for a switch cabinet with vertical frame profiles (20), a base frame and a top frame (10), it being the case that the base frame and the top frame (10) are produced as a punched and bent part from a sheet-steel blank and have a horizontal base (11) on which the vertical frame profiles (20) are fastened, that a reinforcing border (12', 12'') is angled from the base, that four plug-in attachments (15) are fastened on the base frame and the top frame (10), said attachments each being provided with at least one threaded mount (16), that the vertical frame profiles (20) have screw mounts (23) which are arranged in alignment with the threaded mounts (16) of the plug-in attachment (15), and that fastening screws (21') are introduced into the screw mounts (23) and are screwed into the threaded mounts (16), **characterized in that** the base (11) of the base frame and top frame (10) is directed towards the switch-cabinet interior and the reinforcing border (12', 12'') is directed away from the switch-cabinet interior, and **in that** the vertical frame profiles (20) have plug-in mounts (22) by means of which they are pushed onto the plug-in attachments (15) on the end side.

2. Framework according to Claim 1, **characterized in that** the plug-in mount (22) of the frame profile (20) is formed by a hollow profile which has two mutually perpendicular inner profile walls directed into the interior of the switch cabinet, and **in that** one of the inner profile walls is adjoined by a profile-wall extension (25), from which is angled a leg (26) which is spaced apart from the hollow profile and, together with the hollow profile and the profile-wall extension (25), forms a side-wall mount which is open in the outward direction.

3. Framework according to Claim 1 or 2, **characterized in that**, spaced apart from the hollow profile forming the plug-in mount, the vertical frame profile (20) has a fastening wall (28) which is provided with rows of fastening mounts (29) which are spaced apart from one another at equal intervals.

4. Framework according to one of Claims 1 to 3, **characterized in that** the base frame and the top frame (10) are of identical design.

5. Framework according to one of Claims 1 to 4, **characterized in that** at least one cutout (14) is punched out of the base (11) of the base frame and/or top frame (10).

6. Framework according to one of Claims 1 to 5, **characterized in that**, following the border (12'), a horizontally running angled portion (12'') is angled from the base frame (10).

## Revendications

1. Châssis à cadres pour une armoire de commande avec des profilés de cadre verticaux (20), un cadre de fond (10) et un cadre de couverture (10), dans lequel le cadre de fond (10) et le cadre de couverture (10) en tant que pièces estampées et pliées sont fabriqués à partir d'une découpe de tôle d'acier et présentent un fond horizontal (11) sur lequel les profilés de cadre verticaux (20) sont fixés, dans lequel un bord de renforcement (12', 12'') est plié à partir du fond, dans lequel 4 embouts à emboîtement (15) chacun pourvus d'au moins un logement fileté (16) sont fixés sur le cadre de fond (10) et sur le cadre de couverture (10), dans lequel les profilés de cadre verticaux (20) présentent des logements à vis (23) qui sont disposés en alignement sur les logements filetés (16) de l'embout à emboîtement (15) et dans lequel des vis de fixation (21') sont introduites dans les logements à vis (23) et vissées dans les logements filetés (16), **caractérisé en ce que** le fond (11) du cadre de fond (10) et du cadre de couverture (10) est tourné vers l'espace intérieur de l'armoire de commande et le bord de renforcement (12', 12'') est orienté vers l'extérieur de l'espace intérieur de l'armoire de commande, et **en ce que** les profilés de cadre verticaux (20) présentent des logements à emboîtement (22) au moyen desquels on les a fait glisser du côté avant sur les embouts à emboîtement (15).

2. Châssis à cadres selon la revendication 1, **caractérisé en ce que** le logement à emboîtement (22) des profilés de cadre (20) est formé d'un profilé creux qui est orienté avec deux parois internes de profilé perpendiculaires l'une à l'autre dans l'espace intérieur de l'armoire de commande, **en ce qu'**un prolongement de paroi de profilé (25) se raccorde sur l'une des parois internes de profilé à partir de laquelle une aile (26) est pliée qui se trouve à distance du profilé creux et forme conjointement avec le profilé creux et avec le prolongement de paroi de profilé (25) un logement de paroi latérale ouvert vers l'extérieur.

3. Châssis à cadres selon la revendication 1 ou 2, **caractérisé en ce que** le profilé de cadre vertical (20) présente à distance du profilé creux formant l'embout à emboîtement une paroi de fixation (28) qui est pourvue de séries de logements de fixation (29) se trouvant à égale distance les uns des autres.

4. Châssis à cadres selon l'une quelconque des revendications 1 à 3, **caractérisé en ce que** le cadre de fond (10) et le cadre de couverture (10) sont conformés de façon identique.

5. Châssis à cadres selon l'une quelconque des revendications 1 à 4, **caractérisé en ce qu'**au moins une ouverture (14) est estampée à partir du fond (11) du cadre de fond (10) et/ou du cadre de couverture (10).

6. Châssis à cadres selon l'une quelconque des revendications 1 à 5, **caractérisé en ce qu'**un rebord (12'') s'étendant horizontalement et adjacent au bord (12') est plié à partir du cadre de fond (10).
